Europäisches Patentamt

European Patent Office

Office européen des brevets

(11) Veröffentlichungsnummer: **0 338 134 B1**

## EUROPÄISCHE PATENTSCHRIFT

(45) Veröffentlichungstag der Patentschrift: **29.07.92**

(51) Int. Cl.⁵: **B64D 1/04**

(21) Anmeldenummer: **88121368.0**

(22) Anmeldetag: **21.12.88**

(54) **Ausstossvorrichtung für Munitionsträger.**

(30) Priorität: **19.04.88 DE 3813048**

(43) Veröffentlichungstag der Anmeldung:
**25.10.89 Patentblatt 89/43**

(45) Bekanntmachung des Hinweises auf die
Patenterteilung:
**29.07.92 Patentblatt 92/31**

(84) Benannte Vertragsstaaten:
**DE ES FR GB IT**

(56) Entgegenhaltungen:
**GB-A- 2 201 234**
**US-A- 4 377 103**
**US-A- 4 552 327**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Hetzer, Walter
Robert-Koch-Strasse 26
W-8012 Ottobrunn(DE)**
Erfinder: **Göllner, Erwin
Amselweg 7,
W-8011 Oberpframmern(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Ausstoßvorrichtung für Munitionskörper entsprechend dem Oberbegriff des Anspruchs 1.

Eine solche Ausstoßvorrichtung ist bereits durch die US-A-4 552 327 bekannt. Dort wird der größere Kolben des zweifachen Kolbensystems durch Treibgas beaufschlagt, worauf die auf den Hydraulikseiten des zweifachen Kolbensystems befindliche Hydraulikflüssigkeit auf die als Stufenkolben ausgebildeten Ejektorkolben einwirkt und letztere einen Behälter ausstoßen. Die Ejektorkolben werden nach dem Ausstoß des Behälters durch in den Ejektorzylindern befindliche Federn wieder zurückgedrückt, wobei die Hydraulikflüssigkeit in einen Öl-Reservebehälter abfließt. Um die Vorrichtung wieder funktionsfähig zu machen, wird die Hydraulikflüssigkeit aus dem Öl-Reservebehälter über eine Pumpe zurück in das zweifache Kolbensystem gepumpt, wobei das Treibgas wieder verdichtet wird.

Bei einer Ausstoßvorrichtung ist durch die Masse des Munitionskörpers die zum Ausstoßen erforderliche Energie vorgegeben, mit der eine bestimmte Ausstoßgeschwindigkeit zu erzielen ist. Die erforderliche Energie muß also so groß sein, daß noch bei der niedrigsten vorkommenden Außentemperatur von z.B. -50 bis -60 °C das Ausstoßen des Munitionskörpers erfolgen kann. Erfolgt jedoch der Ausstoß eines Munitionskörpers mit diesem Energiegehalt für niedrige Temperaturen bei hohen Einsatztemperaturen von z.B. +40 bis +70 °C, wird die vorhandene Energie nicht ausgenutzt und der Druck auf die Ejektorkolben ist unverhältnismäßig groß, wodurch die auf die Flugzeugstruktur einwirkenden Reaktionskräfte schädliche Wirkungen ausüben können.

Der Erfindung liegt die Aufgabe zugrunde, bei einer Ausstoßvorrichtung der eingangs genannten Art das Treibgas unabhängig von der herrschenden Außentemperatur bereitzustellen und außerdem den Betrieb der Ausstoßvorrichtung zu vereinfachen. Diese Aufgabe wird erfindungsgemäß gelöst mit den kennzeichnenden Merkmalen des Anspruchs 1. Vorteilhafte Weiterbildungen der Erfindung sind durch die Unteransprüche wiedergegeben.

Ein wesentliche Vorteil der Erfindung besteht darin, daß das erwärmte Treibgas unabhängig von der Außentemperatur stets den gleichen Energieinhalt zum Ausstoßen des Munitionskörpers aufweist. Die dabei verwendete Hochdruckflasche braucht somit nicht überdimensioniert zu werden, wodurch Gewicht eingespart werden kann, und die Reaktionskräfte auf die Flugzeugstruktur sind beim Ausstoßen des Munitionskörpers stets gleichbleibend. Ein weiterer Vorteil ist, daß anstelle der zwei Arbeitsgänge des zweifachen Kolbensystems bei der bekannten Ausstoßvorrichtung nur noch ein Arbeitsgang erforderlich ist, mit dem hintereinander die beiden Betriebsarten des zweifachen Kolbensystems durchgeführt werden. Mit Hilfe der hydraulischen Ventilanordnung und des elektrischen Steuergerätes ist ein automatischer Ablauf der Betriebsarten der Ausstoßvorrichtung möglich.

In der Zeichnung ist ein Ausführungsbeispiel der Erfindung schematisch dargestellt. Es zeigen:

Fig. 1    eine Ausstoßvorrichtung für Munitionskörper zum Beginn des Ausschiebens von Ejektorkolben und

Fig. 2    die Ausstoßvorrichtung nach Fig. 1 beim Zurückschieben der Ejektorkolben.

In einer Ausstoßvorrichtung 1 wird in einem Doppelzylinder 2 mit im Durchmesser unterschiedlichen Zylinderteilen 3 und 4 ein Doppelkolben 6 mit den Kolbenteilen 7 und 8 durch ein Treibgas 9 beaufschlagt. Das Treibgas 9 befindet sich in einer Hochdruckgasflasche 10, die mit einem Heizung 11 und einer Isolierung 12 umgeben ist. Durch den Druck des Treibgases 9 auf den Doppelkolben 6 in Richtung des Pfeiles 13 wird Hydrauliköl 14 mit dem Kolbenteil 7 aus dem Zylinderteil 3 in eine Leitung 16 und mit dem Kolbenteil 8 aus dem Zylinderteil 4 in eine Leitung 17 gedrückt. Zwischen der Gasflasche 10 und dem Doppelzylinder 2 ist eine Leitung 18 für das Treibgas 9, welche mit einer Isolierung 19 versehen ist. In die Leitung 18 ist zur Vermeidung von Überdruck im Treibgas eine Berstmembrane 20 eingesetzt. Am Zylinder 3 ist ein, den Hub des Doppelkolbens 6 begrenzender Sensor 21 vorhanden. Ein Öl-Reservebehälter 22 hat eine Zuflußleitung 23 und eine Abflußleitung 24, die zu einer mit einem Elektromotor 25 gekoppelten Hochdruckpumpe 26 führt. Die Hochdruckpumpe 26 ist über eine Leitung 27 und über Rückschlagventile 28 mit den Zylinderteilen 3 und 4 verbunden. Ein elektrisches Steuergerät 30 versorgt die Heizung 11, den Elektromotor 25 und den Sensor 21 über elektrische Leitungen 31, 32 und 33 mit Strom und steuert diese Bauteile entsprechend der jeweiligen Betriebsart der Ausstoßvorrichtung 1.

In eine hydraulische Ventilanordnung 32 führen die von den Zylindern 3 und 4 wegführenden Leitungen 16 und 17. Letztere münden in zwei hydraulisch gesteuerte Einbauventile in Sitzbauweise 33 und 34, in die außerdem noch die gestrichelt dargestellte zweigeteilte Steuerleitung 35 einmündet. Vom Einbauventil 33 führen Leitungen 36 und 37 sowie vom Einbauventil 34 Leitungen 38 und 39 ab. Je nachdem welche der einmündenden Leitungen 16, 17 und 35 unter Druck stehen, werden in den Einbauventilen vorhandene Ventilkolben 40 und 41 verschoben. Die Leitungen 37 und 39 führen in einen an und für sich bekannten Drei-Wege-Mengenteiler 43, von dem zwei Meßdrosseln 44 und 45 abgehen. Das aus den Meßdrosseln abgehende Öl fließt durch eine Leitung 46 in ein weiteres hydraulisch gesteuertes Einbauventil in Sitzbauweise 47 mit Ventilkolben 48. Die Ölströme werden weiterhin durch zwei mit drei Anschlüssen und zwei Schaltstellungen versehenen 3/2-Wege-Ventile 50 und 51, die mit Hilfe von Solenoiden 52 und 53 betätigt werden, entsprechend den jeweiligen Erfordernissen auf die Leitungen aufgeteilt. Die Selonoide 52 und 53 werden über elektrische Leitungen 54 und 55 vom elektrischen Steuergerät 30 nach Bedarf geschaltet. Die Beschreibung der mit den Ventilen 50 und 51 verbundenen Leitungen sowie von noch vorhandenen Rückschlagventilen wird bei der Beschreibung der einzelnen Betriebsarten der Ausstoßvorrichtung 1 vorgenommen.

Zum Ausstoß eines nicht dargestellten Munitionskörpers dienen Ejektoren 60 und 61, in deren Zylindern 62 und 63 Stufenkolben 64 und 65 arbeiten. Letztere bestehen aus je einem kürzeren, in die Zylinder 62 und 63 eingepaßten Teil 64a bzw. 65a und aus je einem längeren, als Ausstoßstempel für den Munitionskörper dienenden Teil 64b bzw. 65b mit kleinerem Durchmesser. In die oberen Teile 66a und 67a der Zylinder 62 und 63 münden die von den Einbauventilen 34 und 33 kommenden Ölleitungen 38 und 36. In die sich durch die Kolbenteile 64b und 65b ergebenden Ringräume 66b und 67b der Zylinder 62 und 63 münden unten die Zweige einer aus dem Einbauteil 47 abgehenden zweigeteilten Leitung 49.

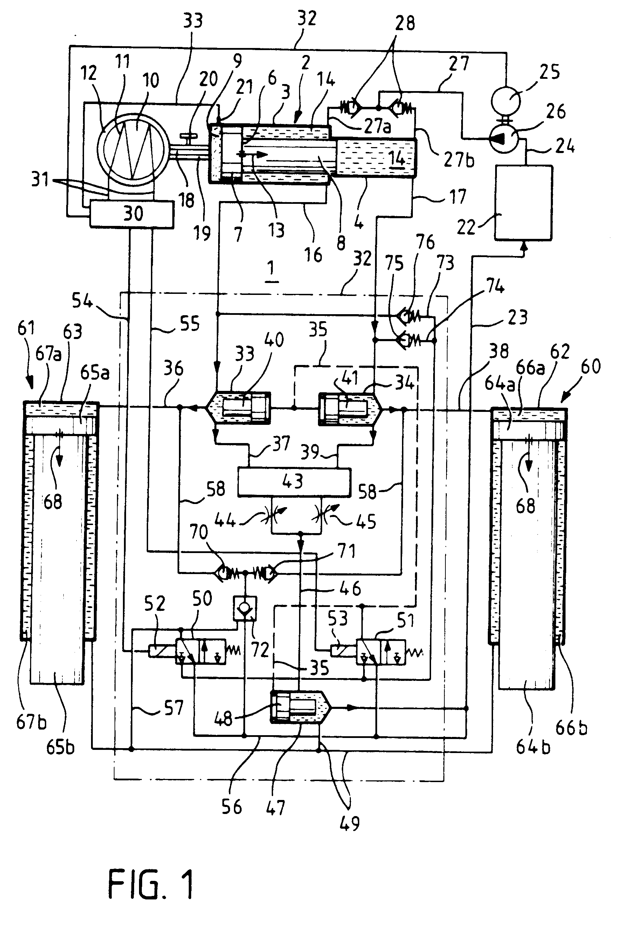

In der Fig. 1 ist der Beginn der Betriebsart "Ausstoßen des Munitionskörpers" dargestellt. Dabei strömt Treibgas 9 aus der Hochdruckgasflasche 10 in den Doppelzylinder 2, wobei der Doppelkolben 6 in Richtung des Pfeiles 13 verschoben wird. Das Hydrauliköl 14 fließt dadurch aus den Doppelzylindern 3 und 4 durch die Leitungen 16 und 17, drückt in den Einbauventilen 33 und 34 die Ventilkolben 40 und 41 in die dargestellte Position, fließt durch die Leitungen 36 und 38 in die oberen Zylinderräume 67a und 66a der Ejektoren 61 und 60 und drückt in Richtung von Pfeilen 68 auf die Ejektorkolben 64a und 65a. Die 3/2-Wege-Ventile 50 und 51 werden durch das elektrische Steuergerät 30 und mit Hilfe der Solenoide 52 und 53 in die dargestellte Stellung geschoben, wobei sie untereinander durch eine Leitung 56 auch über die Leitungen 35, 57 und 49 mit den Einbauventilen 33, 34 und 47 sowie mit dem Ringräumen 66b und 67b der Ejektorzylinder 62 und 63 verbunden sind. Das Einbauventil 47 ist über die Leitung 23 mit dem Reservebehälter 22 verbunden. Somit sind die Ringräume 66b und 67b zusätzlich über das Ventil 50 mit dem Reservebehälter 22 verbunden, falls das Einbauventil 47 eine Fehlfunktion aufweist. Das zwischen den Rückschlagventilen 70 und 71 angeordnete entsperrbare Rückschlagventil 72 ist gesperrt. Dadurch ist ein Abfluß des Drucköls aus den oberen Zylinderräumen 66a und 67a in den Reservebehälter 22 vermieden. Durch die Rückschlagventile 70 und 71 wird ein Ölfluß zwischen den Zylinderkammern 66a und 67a über die Leitung 58 verhindert, es ist aber eine hydraulische Zwangskopplung der beiden Zylinderräume 66a und 67a über den Doppelzylinder 2 gewährleistet, wodurch eventuelle äußere Laststörungen, z.B. aerodynamischer Art oder durch Reibung, ausgeglichen werden. Zwei weitere, von den Hauptdruckleitungen 16 und 17 abgehende Öldruckleitungen 73 und 74, in denen je ein Rückschlagventil 75 und 76 angeordnet sind, sind mit den 3/2-Wege-Ventilen 50 und 51 verbunden, bei der Betriebsart "Ausstoßen" sind sie jedoch nicht auf Durchgang geschaltet.

Der Drei-Wege-Mengenteiler 43 ist nur bei der Betriebsart "Ausstoßen" in Funktion; diesem und den Meßdrosseln 44 und 45 werden über die Einbauventile 33 und 34 geringe Teilströme aus den Druckölströmen über die Leitungen 37 und 39 zugeführt. Durch die Konstruktion des Drei-Wege-Mengenteilers 43 mit einem Druckwaage-Regelkolben und zwei variablen Drosseln können in Verbindung mit den Meßdrosseln 44 und 45 die den Ejektoren 60 und 61 zufließenden Ölströme in der Menge variiert werden, wodurch dem ausstoßenden Munitionskörper eine Nickgeschwindigkeit aufgezwungen wird. Dieses kann durch Voreinstellung manuell oder auch elektrisch gesteuert im Fluge erfolgen. Dazu müßten, in nicht dargestellter Weise, die Meßdrosseln 44 und 45 mit dem elektrischen Steuergerät 30 verbunden werden. Bei Lastdruckschwankungen an den beiden Ejektoren 60 und 61 bleibt durch den eingebauten Druckwaage-Regelkolben die vorgewählte Nickgeschwindigkeit weitgehend lastunabhängig. Das abfließende Öl aus dem Drei-Wege-Mengenteiler 43 fließt drucklos durch die Leitung 46, das Einbauventil 47 und die Leitung 23 in den Reservebehälter 22 ab.

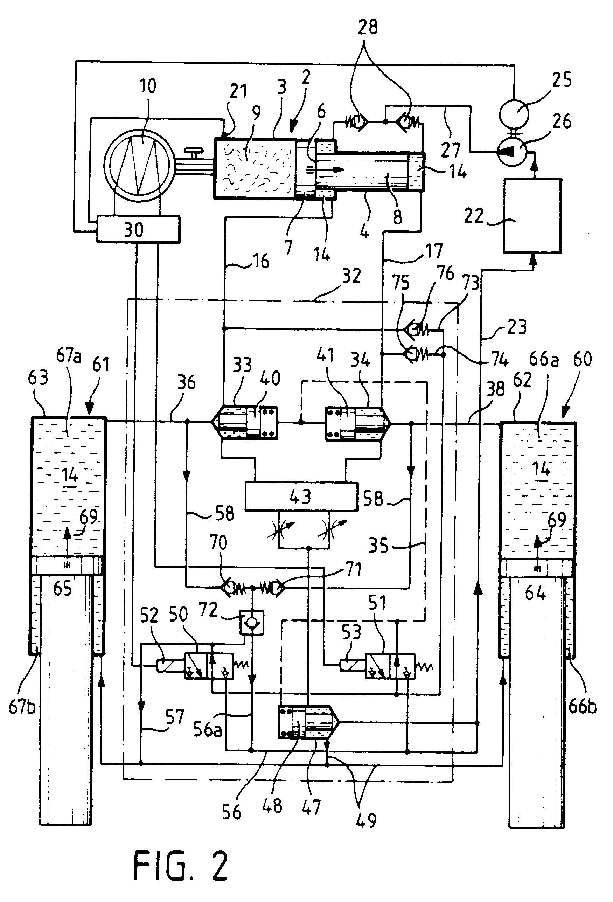

Die Betriebsart "Zurückschieben der Ejektorkolben 64 und 65" ist in Fig. 2 dargestellt. Nach dem Abstoßen des Munitionskörpers kommt der Doppelkolben 6 vor seiner Endstellung zum Stillstand. Die beim Resthub noch verfügbare Energie aus dem Drucköl 14 dient zum Zurückschieben der Ejektorkolben 64 und 65 in Richtung von Pfeilen 69. Die beiden 3/2-Wege-Ventile 50 und 51 sind stromlos geschaltet und durch ihre Rückstellfedern in ihre in der Fig. 2 dargestellte zweite Schaltstellung verschoben. Dadurch werden die Ölströme aus den Leitungen 16 und 17 über die Leitungen 73 und 74 und die Rückschlagventile 75 und 76 durch das 3/2-Wege-Ventil 51 in die gestrichelte Steuerleitung 35 geleitet. Dieses bewirkt in den Einbauventilen 33, 34 und 47 das Verschieben ihrer Ventilkolben 40, 41 und 48, wodurch der Drucköizufluß in den Leitungen 36 und 38 zu den oberen Zylinderräumen 67a und 66a unterbunden wird und das Drucköl durch das 3/2-Wege-Ventil 50 und die Leitung 57 in die Ringräume 66b und 67b eintritt. Dadurch werden die Ejektorkolben 64 und 65 in Richtung der Pfeile 69 zurückgeschoben. Gleichzeitig wird das entsperrbare Rückschlagventil 72 über das 3/2-Wege-Ventil 50 druckbeaufschlagt, damit entsperrt und auf Durchgang geschaltet. Das aus den oberen Zylinderräumen 66a und 67a der Ejektoren 60 und 61 herausgedrückte Öl kann somit durch die Leitungen 36 und 38, die Leitungen 58, die Rückschlagventile 70, 71 und 72 sowie die Leitungen 56a, 56 und 23 in den Öl-Reservebehälter 22 fließen und diesen wieder auffüllen.

Bei der Betriebsart "Reaktivieren der Ausstoßvorrichtung" wird durch die mit dem Elektromotor 25 angetriebene Hochdruckölpumpe 26 das Öl aus dem Öl-Reservebehälter 22 über die Leitung 27 und die Rückschlagventile 28 in die Zylinderräume 3 und 4 gepumpt. Dadurch werden die Kolbenteile 7 und 8 des Doppelkolbens 6 in die Zylinder 3 und 4 zurückgeschoben, das Treibgas 9 hoch verdichtet und wieder in die Hochdruckgasflasche 10 zurückgedrückt. Der Sensor 21 begrenzt dabei die Bewegung des Doppelkolbens 6. Nachdem somit das Treibgas 9 in der Hochdruckgasflasche 10 auf seinen Ausgangszustand, sowohl nach Druck als auch nach Volumen, reaktiviert ist, ist die Ausstoßvorrichtung 1 wieder betriebsbereit.

**Patentansprüche**

1. Ausstoßvorrichtung für Munitionskörper mit einem durch Treibgas (9) beaufschlagten zweifachen Kolbensystem (2), das mit Hilfe einer Hydraulikflüssigkeit (14) und einer hydraulischen Ventilanordnung (32) auf zwei Ejektorkolben (64,65) einwirkt, wobei die Ejektorkolben (64,65) als Stufenkolben ausgebildet sind und mit einem kurzen, in die Ejektorzylinder (62,63) eingepaßten Teil (64a,65a) und einem längeren als Ausstoßstempel dienenden Teil (64b,65b) mit kleinerem Durchmesser und wobei beim Zurückschieben der Ejektorkolben (64,65) das aus den Ejektorzylindern (62,63) ausgeschobene Hydrauliköl (14) über die hydraulische Ventilanordnung (32) in den Öl-Reservebehälter (22) strömt, **dadurch gekennzeichnet,** daß das Treibgas (9) auf eine gleichmäßige Betriebstemperatur aufgewärmt und nach dem Ausstoß des Munitionskörpers reaktiviert ist, und daß das durch das Treibgas (9) beaufschlagte zweifache Kolbensystem (2) bei einem Arbeitsgang zwei Betriebsarten durchfährt, wovon die erste, den größeren Teil seines Hubes umfassende Betriebsart, das Ausschieben der Ejektorkolben (64,65) und die den restlichen Hub beanspruchende Betriebsart das Zurückschieben der Ejektorkolben (64,65) umfaßt.

2. Ausstoßvorrichtung nach den Anspruch 1, **dadurch gekennzeichnet,** daß das Treibgas (9) auf eine Temperatur erwärmt ist, die etwa der höchsten im Betrieb auftretenden Außentemperatur entspricht.

3. Ausstoßvorrichtung nach Anspruch 1, **dadurch gekennzeichnet,** daß bei beiden Betriebsarten das Hydrauliköl (14) über die hydraulische Ventilanordnung (32) in den Öl-Reservebehälter (22) strömt.

4. Ausstoßvorrichtung nach den Ansprüchen 1 und 2, **dadurch gekennzeichnet,** daß das Treibgas (9), z.B. Stickstoff, in einer Hochdruckgasflasche (10), die mit einer Heizung (11) und einer Isolierung (12) versehen ist, auf die Betriebstemperatur erwärmt ist und mit dieser Temperatur in das zweifache Kolbensystem (2) eintritt.

5. Ausstoßvorrichtung nach Anspruch 1, **dadurch gekennzeichnet,** daß die Ejektorzylinder (62, 63) obere Zuleitungen (36, 38) für Hydrauliköl (14) zum Ausschieben der Stufenkolben (64, 65) und untere Zuleitungen (49) zum Zurückschieben der Stufenkolben in die Ejektorzylinder aufweisen.

6. Ausstoßvorrichtung nach Anspruch 1, **dadurch gekennzeichnet,** daß das zweifache Kolbensystem (2) aus einem Doppelkolben (6) mit zwei den Kolbendurchmessern entsprechenden Zylinderteilen (3, 4) besteht, wobei das Treibgas (9) auf den Kolbenteil (7) mit größeren Durchmesser einwirkt, jeder der beiden Zylinderteile etwa das gleiche Volumen aufweist und am Ende von jedem Zylinderteil je eine Ausflußöffnung (16, 17) und Einlaßöffnung (27a, 27b) für Hydrauliköl (14) vorhanden ist.

7. Ausstoßvorrichtung nach Anspruch 6, **dadurch gekennzeichnet,** daß die Ausflußleitungen (16, 17) der Zylinderteile (3, 4) mit der hydraulischen Ventilanordnung (32) und die Zuflußleitungen (27a, 27b) der Zylinderteile über Rückschlagventile (28) mit einer durch einen Elektromotor (25) angetriebenen Hochdruckpumpe (26) verbunden sind.

8. Ausstoßvorrichtung nach einem oder mehreren der Ansprüche 1 bis 7, **dadurch gekenn-**

zeichnet, daß zur Reaktivierung des Treibgases (9) die Hochdruckpumpe (26) das Hydrauliköl (14) aus dem Öl-Reservebehälter (22) über die Rückschlagventile (28) in die beiden Zylinder (3, 4) des Doppelkolbensystems (2) pumpt, dabei den Doppelkolben (6) zurückschiebt, das Treibgas komprimiert und dieses wieder in die Hochdruckgasflasche (10) zurückdrückt, wobei die Endstellung des Doppelkolbens durch einen Sensor (21) begrenzt ist.

9. Ausstoßvorrichtung nach Anspruch 1, **dadurch gekennzeichnet,** daß die hydraulische Ventilanordnung (32) aus drei hydraulisch gesteuerten Einbauventilen in Sitzbauweise (33, 34, 47), einen Drei-Wege-Mengenteiler (43), zwei Meßdrosseln (44, 45), zwei 3/2-Wege-Ventilen (50, 51) mit Solenoiden (52, 53), einem entsperrbaren Rückschlagventil (72), vier einfachen Rückschlagventilen (70, 71, 75, 76) und den die einzelnen Ventile verbindenden Hydraulikleitungen besteht.

10. Ausstoßvorrichtung nach einem oder mehreren der Ansprüche 1 bis 9, **dadurch gekennzeichnet,** daß die Folge der Betriebsarten (Ausschieben und Zurückschieben der Ejektorkolben, Reaktivieren der Ausstoßvorrichtung) durch Betätigen der zwei 3/2-Wege-Ventile (50, 51), des Elektromotors (25) und des Sensors (21) sowie die Temperaturregelung der Heizung (11) der Hochdruckgasflasche (10) mit Hilfe eines elektrischen Steuergerätes (30) automatisch gesteuert ist.

## Claims

1. Ejector for ammunition bodies having a propellant-gas operated double piston system (2) which acts, by means of a hydraulic medium (14) and a hydraulic valve arrangement (32), on two ejector pistons (64, 65), in which respect the ejector pistons (64, 65) are differential pistons with a shorter part (64a, 65a) which is fitted into the ejector cylinder (62, 63), and a longer part (64b, 65b) of smaller diameter serving as ejector surface, and in which respect the hydraulic oil (14), which is pushed out of the ejector cylinders (62, 63) during the return stroke of the ejector piston (64, 65), flows via the hudraulic valve arrangement (32) into the oil reservoir (22), **characterised in that** the propellant gas (9) is heated to an even operating temperature and reactivated after ejection of the ammunition body, and that the double piston system (2), which is operated by propellant gas (9), passes through two operating modes within one work cycle, of which the first operating mode, which covers the larger portion of its stroke, includes pushing out the ejector piston (64, 65), and the operating mode, which covers the remaining stroke, includes the return stroke of the ejector pistons (64, 65).

2. Ejector according to claim 1, **characterised in that** the propellant gas (9) is heated to a temperature which corresponds approximately with the highest ambient temperature during operation.

3. Ejector according to claim 1, **characterised in that** the hydraulic oil (14) flows, in both operating modes, via the hydraulic valve arrangement (32) into the oil reservoir (22).

4. Ejector according to claims 1 and 2, **characterised in that** the propellant gas (9), for example nitrogen, is heated to operating temperature in a high-pressure gas cylinder (10), which is provided with a heater (11) and insulation (12), and enters the double piston system (2) at that temperature.

5. Ejector according to claim 1, **characterised in that** the ejector cylinders (62, 63) comprise upper feed pipes (36, 38) for hydraulic oil (14) for the outward stroke of the differential pistons (64, 65), and lower feed pipes (49) for the return stroke of the differential pistons into the ejector cylinders.

6. Ejector according to claim 1, **characterised in that** the double piston system (2) comprises a double piston (6) having two cylinder parts (3, 4) corresponding with the piston diameters, in which respect the propellant gas (9) acts on the piston part (7), of larger diameter, each of the two cylinder portions has approximately the same volume, and a respective discharge opening (16, 17) and intake opening (27a, 27b) for hydraulic oil (14) is provided at the end of each cylinder part.

7. Ejector according to claim 6, **characterised in that** the discharge pipes (16, 17) of the cylinder parts (3, 4) are connected to the hydraulic valve arrangement (32), and the feed pipes (27a, 27b) of the cylinder parts are connected via non-return valves (28) to a high-pressure pump (26), which is driven by an electric motor.

8. Ejector according to one or more of claims 1 to 7, **characterised in that, for the purpose of reactivation of the propellant gas (9),** the high-pressure pump (26) pumps the hydraulic oil (14) from the oil reservoir (22) via the non-return valves (28) into the two cylinders of the double-piston system (2), thereby pushing the double piston (6) back, compressing the propellant gas and forcing it back into the high-pressure cylinder (10), in which respect the end position of the double piston is defined by a sensor (21).

9. Ejector according to claim 1, **characterised in that** the hydraulic valve arrangement (32) comprises three hydraulically controlled built-in valves of integral design (33, 34, 47), a three-way proportional distributor (43), two measuring restrictors (44, 45), two 3/2-way valves (50, 51) with solenoids (52, 53), an unlockable non-return valve (72), four single non-return valves (70, 71, 75, 76) and hydraulic pipes to connect the individual valves.

10. Ejector according to one or more of claims 1 to 9, **characterised in that** the order of operational modes (outward and return stroke of the ejector pistons, reactivation of the ejector) by operating the two 3/2-way valves (50, 51), the electric motor (25) and the sensor (21), as well as the temperature control of the heater (11) of the high-pressure gas cylinder (10), is automatically controlled by means of an electrical control device (30).

## Revendications

1. Dispositif d'éjection pour support de munition, comportant un système à double piston (2) sollicité par du gaz propulseur (9), ce système agissant, a l'aide d'un fluide hydraulique (14) et d'un agencement de valves hydrauliques (32), sur deux pistons d'éjecteur (64, 65) qui sont réalisés en tant que pistons étagés avec une partie courte (64a, 65a) adaptée dans les cylindres d'éjecteur (62, 63) et avec une partie plus longue (64b, 65b), dotée d'un plus petit diamètre, servant de poussoir d'éjecteur, l'huile hydraulique (14) éjectée des cylindres d'éjecteur (62, 63) lors de la rétraction des pistons d'éjecteur (64, 65) s'écoulant dans le réservoir d'huile (22) via l'agencement de valves hydrauliques (32), caractérisé par le fait que le gaz propulseur (9) est réchauffé à une température de fonctionnement uniforme et est réactivé après l'éjection du support de munition, et par le fait que le système à double piston (2) sollicité par le gaz propulseur (9) passe par deux modes de fonctionnement au cours d'une opération, le premier mode de fonctionnement englobant la plus grande partie de sa course, comportant le déploiement des pistons d'éjecteur (64, 65), et le mode de fonctionnement relatif au reste de la course englobant la rétraction des pistons d'éjecteur (64, 65).

2. Dispositif d'éjection selon revendication 1, caractérisé par le fait que le gaz propulseur (9) est réchauffé à une température correspondant à peu près à la température extérieure maximale survenant en fonctionnement.

3. Dispositif d'éjection selon revendication 1, caractérisé par le fait que, dans les deux modes de fonctionnement, l'huile hydraulique (14) s'écoule dans le réservoir d'huile (22) en passant par l'agencement de valves hydrauliques (32).

4. Dispositif d'éjection selon revendications 1 et 2, caractérisé par le fait que le gaz propulseur (9), par exemple de l'azote, est réchauffé à la température de fonctionnement dans une bouteille de gaz à haute pression (10) munie d'un chauffage (11) et d'une isolation (12), et entre dans le système à double piston (2) en étant à cette température.

5. Dispositif d'éjection selon revendication 1, caractérisé par le fait que les cylindres d'éjecteur (62, 63) présentent des conduites supérieures (36, 38) pour l'amenée d'huile hydraulique (14) pour le déploiement des pistons étagés (64, 65) et des conduites inférieures (49) pour la rétraction des pistons étagés dans les cylindres d'éjecteur.

6. Dispositif d'éjection selon revendication 1, caractérisé par le fait que le système à double piston (2) est constitué par un double piston (6) et deux parties de cylindre (3, 4) correspondant aux diamètres du piston, le gaz propulseur (9) agissant sur la partie de piston (7) ayant le plus grand diamètre, chacune des deux parties de cylindre présentant sensiblement le même volume et ayant un orifice de sortie (16, 17) ainsi qu'un orifice d'entrée (27a, 27b) pour l'huile hydraulique (14) présents à l'extrémité de chaque partie cylindrique.

7. Dispositif d'éjection selon revendication 6, caractérisé par le fait que les conduites de sortie (16, 17) des parties de cylindre (3 4) sont reliées à l'agencement de valves hydrauliques (32) et les conduites d'amenée (27a, 27b) des parties de cylindre sont reliées, par l'intermédiaire de soupapes antiretour (28), à une pompe à haute pression (26) entraînée par un moteur électrique (25).

8. Dispositif d'éjection selon une ou plusieurs des revendicationts 1 à 7, caractérisé par le fait que, pour réactiver le gaz propulseur (9), la pompe haute pression (26) pompe de l'huile hydraulique (14) du réservoir d'huile (22) et l'envoie, via les soupapes antiretour (28), dans les deux cylindres (3, 4) du système à double piston (2), ce qui repousse le double piston (6), comprime le gaz propulseur et le refoule dans la bouteille de gaz à haute pression (10), la position finale du double piston étant limitée par un capteur (21).

9. Dispositif d'éjection selon revendication 1, caractérisé par le fait que l'agencement de valves hydrauliques (32) est constitué par trois soupapes à siège (33, 34, 47), par un répartiteur à trois voies (43),par deux étranglements doseurs (44. 45), par deux distributeurs (50, 51) du type à 3 voies/2 positions commandés par solénoïdes (52, 53), par une soupape du type à antiretour inactivable (72), par quatre soupapes antiretour simples (70, 71, 75, 76), et par les conduites hydrauliques reliant les différentes soupapes individuelles.

10. Dispositif d'éjection selon une ou plusieurs des revendications 1 à 9, caractérisé par le fait que la séquence des modes de fonctionnement (déploiement et rétraction des pistons d'éjecteur, réactivation du dispositif d'éjection) est commandée de manière automatique par l'actionnement des deux distributeurs (50, 51) du type à 3 voies/2 positions, du moteur électrique (25) et du capteur (21), la régulation de température du chauffage (11) de la bouteille à gas sous haute pression (10) étant commandée automatiquement à l'aide d'un appareil de commande électrique (30).

# FIG. 1

FIG. 2